(19) **Europäisches Patentamt**
**European Patent Office**
**Office européen des brevets**

(11) **EP 1 727 772 B1**

(12) **EUROPÄISCHE PATENTSCHRIFT**

(45) Veröffentlichungstag und Bekanntmachung des Hinweises auf die Patenterteilung:
**23.02.2011 Patentblatt 2011/08**

(51) Int Cl.:
***C03B 33/09*** (2006.01)

(21) Anmeldenummer: **05715091.4**

(86) Internationale Anmeldenummer:
**PCT/DE2005/000509**

(22) Anmeldetag: **18.03.2005**

(87) Internationale Veröffentlichungsnummer:
**WO 2005/092806 (06.10.2005 Gazette 2005/40)**

(54) **VERFAHREN ZUM LASERTHERMISCHEN TRENNEN VON FLACHGLÄSERN**

METHOD FOR LASER-INDUCED THERMAL SEPARATION OF PLANE GLASS

PROCEDE DE SEPARATION DE VERRES PLATS AU LASER

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **22.03.2004 DE 102004014277**

(43) Veröffentlichungstag der Anmeldung:
**06.12.2006 Patentblatt 2006/49**

(73) Patentinhaber:
- **Fraunhofer-Gesellschaft zur Förderung der angewandten Forschung e.V.
  80686 München (DE)**
- **Grenzebach Maschinenbau GmbH
  86663 Asbach-Bäumenheim/Hamlar (DE)**

(72) Erfinder:
- **DÖLL, Walter
  79276 Reute (DE)**
- **KOLLOFF, Rainer
  79206 Breisach (DE)**
- **KORDISCH, Horst
  79268 Bötzingen (DE)**
- **KÜBLER, Rainer
  79106 Freiburg (DE)**
- **SPIESS, Gerd
  79115 Freiburg (DE)**

- **FRIEDL, Wolfgang
  86687 Kaisheim (DE)**
- **GLASER, Siegfried
  37688 Beverungen (DE)**
- **PÖHLER, Manfred
  39240 Klein-Rosenburg (DE)**

(74) Vertreter: **Gallo, Wolfgang et al
Fleuchaus & Gallo Partnerschaft
Patent- und Rechtsanwälte
Ludwigstrasse 26
86152 Augsburg (DE)**

(56) Entgegenhaltungen:
EP-A- 0 448 168    WO-A-02/48059
DE-A1- 10 004 876    DE-A1- 19 962 906
GB-A- 2 139 613    US-A- 5 609 284
US-A- 5 984 159    US-A1- 2002 179 667
US-A1- 2003 062 348

- **PATENT ABSTRACTS OF JAPAN Bd. 2003, Nr. 07, 3. Juli 2003 (2003-07-03) -& JP 2003 088976 A (HAMAMATSU PHOTONICS KK), 25. März 2003 (2003-03-25)**
- **PATENT ABSTRACTS OF JAPAN Bd. 2002, Nr. 05, 3. Mai 2002 (2002-05-03) -& JP 2002 020134 A (NAKAMURA TOME PRECISION IND CO LTD), 23. Januar 2002 (2002-01-23)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum schädigungsarmen Trennen von Flachgläsern, wobei ein Laser zur Erzeugung eines thermischen Anritzes des Flachglases eingesetzt wird.

Flachgläser werden heute immer noch weit überwiegend durch Anritzen mit einem Ritzrädchen und anschließenden Biegebruch getrennt. Das notwendige mechanische Verletzen der Glasoberfläche längs der gesamten Länge der Soll-Trennlinie durch das Ritzrädchen ist mit Ausmuschelungen und Abplatzungen des Glases an der Kante verbunden, die zu einer reduzierten Kantenfestigkeit führen. Glassplitter und eingesetztes Schneidöl können sehr störend sein bei nachfolgenden Bearbeitungsprozessen wie Beschichten, weshalb die Kante zuvor aufwendig nachbearbeitet werden muss durch Säumen, Schleifen, Waschen.

Bekanntlich kann an Glasplatten ein Oberflächenanriss mit einer ausgezeichneten Qualität, die die beschriebenen Nachteile vermeidet, durch thermisch induzierte Spannungen erzeugt werden. Dazu wird der Bereich, in dem der Riss entstehen soll, durch lokale Erwärmung erhitzt und durch lokale Kühlung ausgelöst, nachdem zuvor eine winzige Oberflächenverletzung durch z.B. Vickers-Eindruck eingebracht wurde. Diese Methode wurde z.B. seitens der Fraunhofer IWM in seinen historischen Untersuchungen zu Bruchvorgängen an Gläsern eingesetzt. F: Kerkhoff: "Ein einfacher Versuch zur Bruchflächenmarkierung durch mechanische Impulse," Glastechn. Bericht 28, S. 57/58 (1955); F. Kerkhof: "Bruchvorgänge in Gläsern" Verlag der Deutschen Glastechnischen Gesellschaft, Frankfurt/Main (1970). Die Erwärmung wurde durch feine Flammen oder Heißluftgebläse aufgebracht, die Kühlung durch Wasser oder Luft/Wassergemische.

In der deutschen Patentschrift DE 28 13 302 werden ein Verfahren und eine Vorrichtung zum geradlinigen Schneiden von Flachglas mit Hilfe von thermisch induzierten Spannungen beschrieben, mit denen Glasplatten geradlinig mittels Erwärmung und nachfolgender Kühlung, die in einem konstanten geometrischen Abstand aufeinander folgen, geschnitten werden können. Es können auch dicke Gläser (20 mm) geschnitten werden, allerdings nur bei Geschwindigkeiten bis zu 0,5 m/min. Da es sich um offene Schnitte handelt, ist die Schnittlage im wesentlichen auf mittige Schnitte beschränkt, da sich ansonsten Randeffekte auswirken, die zu einem instabilen Rissverlauf mit gravierenden Abweichungen von der Soll-Linie führen.

Der Einsatz eines Lasers zur Erzeugung eines thermischen Anritzes mit hoher Genauigkeit längs einer Soll-Linie ist im US-Patent 5 609 284 offenbart. Eingesetzt werden Laser mit solchen Wellenlängen, deren Strahlung an der Oberfläche des Glases absorbiert wird, vorzugsweise $CO_2$-Laser (10,6 $\mu$m). Durch den Laser wird ein elliptischer Wärmefleck auf der Glasoberfläche aufgebracht und mit einer Vorschubgeschwindigkeit v symmetrisch längs der Soll-Trennlinie bewegt; die Kühlung folgt in einem geometrisch konstanten Abstand L, wobei der Anritz unter der gekühlten Fläche entsteht. Das Besondere an dieser US-Patentschrift 5 609 284 ist nun, dass sie eine Korrelation zwischen Schnittgeschwindigkeit v und Anritztiefe $\delta$ angibt, und zwar

$$v = k \cdot a\,(b + L) / \delta$$

wobei a, b geometrische Parameter des elliptischen Wärmeflecks sind, L der Abstand von Wärmequelle zu Kühlfleck und k eine Proportionalitätskonstante ist. Die geschnittenen Glasdicken liegen zwischen 1,2mm und 6 mm, die erreichbare maximale Schnittgeschwindigkeit bei 1 m/min.

Da während eines Schneidvorganges die Parameter a, b, L, und k konstant sind, ergibt sich aus dem vorstehenden Zusammenhang, daß die erreichbare Anritztiefe $\delta$ umgekehrt proportional zur Schnittgeschwindigkeit v ist. Je größer die Schnittgeschwindigkeit gewählt wird, desto kleiner wird die resultierende Anritztiefe. Bekanntlich wird aber mit kleinerer Anritztiefe der nachfolgende Bruchprozess umso schwieriger mit dem Resultat einer sich verschlechternden Kantenqualität. Nach der US 5 609 284 führen bei dickeren Glasplatten sogar kleinere Schnittgeschwindigkeiten, nämlich solche mit weit weniger als 1 m/min, zu flachen Anrissen mit der Folge, dass der nachfolgende Trennprozess ziemlich schwierig ist. Dies ist vermutlich auch der Grund, warum dort keine Trennbeispiele für Glasplatten mit Dicken von mehr als 6 mm angegeben werden. Bezüglich der Ausdehnung b der elliptischen Wärmequelle in Schneidrichtung wird ein Verhältnis zur Glasdicke h von $1 \leq b/h \leq 20$ empfohlen, da bezüglich b < h die resultierende Schnittgeschwindigkeit zu klein werde und bei b > 10 sich die Schnittgenauigkeit verschlechtere. Anzumerken ist auch, dass die elliptische Form der Wärmequelle und der geometrisch konstante Abstand von Wärmequelle zu Kühldüse zu erheblichem Nachteil beim Schneiden von Kurven führen kann. Dies macht sich insbesondere bei kleineren Radien durch Abweichungen der Schneidkurve von der Soll-Linie bemerkbar.

Aus der US 2002/179 667 A1 ist außerdem das Laserschneiden aus Glas entlang gekrümmter Schnittlinien beschrieben, wobei ein entlang der gekrümmten Schnittlinie wandernder Brennfleck eines Laserstrahls den Wärmeeintrag in das Glas bewirkt. Der Brennfleck wird hierbei als ein jeweils einen kurzen Abschnitt der Soll-Trennlinie überdeckender länglicher Brennfleck durch einen ozillierenden Laserstrahl erzeugt, der scannend über die Soll-Trennlinie bewegt wird. Die Länge dieses Brennflecks ist abhängig von der Krümmung der Trennlinie, und bei stärkerer Krümmung wird die Länge dieses Brennflecks, die dort als "scan amplitude" bereichnet wird, immer kleiner gemacht.

Gegenüber diesem Stand der Technik liegt der Erfindung die Aufgabe zugrunde, thermische Anrisse in Glasplatten längs vorgegebener Soll-Linien mit hoher Genauigkeit einzubringen und dabei höhere Schnittgeschwindigkeiten fahren zu können (deutlich größer als 1 m/min. Insbesondere sollen auch Gläser mit größerer Dicke in guter Qualität getrennt werden können und insbesondere auch sehr dicke Gläser (ca. 20 mm) ausreichend tief angeritzt werden. Dies alles soll auch bei Kurvenschnitten erreicht werden.

Eine Bewältigung dieser bisher ungelösten Probleme ist für die technische Anwendung von hoher Bedeutung. Floatgläser werden nämlich in einer Dicke von ca. 1mm bis ca. 20 mm hergestellt, wobei die Vorschubgeschwindigkeiten des Glasbands bei der Glaserzeugung je nach Glasdicke (sowie Tonnage des Schmelzofens) zwischen 30 m/mm und 2 m/min liegen. Diese Vorschubgeschwindigkeiten übersteigen damit bei weitem die möglichen Schnittgeschwindigkeiten nach der US 5 609 284, so daß ein der Glasfertigungsgeschwindigkeit angepasstes Trennen des erzeugten Glasbands nicht möglich ist.

Die eben dargestellte Aufgabe wird gemäß der Erfindung durch das im Anspruch 1 angegebene Verfahren gelöst. Vorteilhafte Weiterbildungen und Ausgestaltungen der Erfindung sind Gegenstand der Unteransprüche.

Zunächst zieht der erfindungsgemäße Lösungsweg glasspezifische Schädigungsaspekte in Betracht und leitet daraus eine Lehre zur Vermeidung ab, eine notwendigerweise zu erfüllende Voraussetzung für die Erzeugung von Schnittflächen in hoher Qualität. Einer Erhöhung der Schnittgeschwindigkeit durch Erhöhung der einwirkenden Laserenergie sind Grenzen gesetzt durch die Entstehung von Schrennrissen und Aufschmelzungen. Schrennrisse sind sich quer zur Ritzlinie ausbildende kleine Spannungsrisse. Da sowohl Schrennrisse als auch Aufschmelzungen unbedingt vermieden werden müssen, kann dem Glas bei der im Hinblick auf die hohen Schnittgeschwindigkeiten notwendigen schnellen Energiezufuhr nur eine bestimmte maximale Energie pro Zeiteinheit und pro Flächen- bzw. (Volumen-)Element zugeführt werden. Dies ist eine materialspezifische Größe, die abhängig ist von der Glasart wie (Kalk-Natron-)Floatgas, Borofloatglas sowie der Einfärbung des Glases und gegebenenfalls auch von den Herstellbedingungen. Für Floatglas wurde experimentell ein oberer Grenzwert Sg von 0,016 Watt x Sekunden/mm$^2$ ermittelt. Daraus folgt, dass ein vorgegebenes Oberflächenelement nicht ununterbrochen mit mehr Wärme als dem oberen Grenzwert beaufschlagt werden darf, da es ansonsten zu Schrennrissen und Aufschmelzungen kommen würde.

Um dennoch mehr Wärme in ein Flächenelement schädigungsfrei eintragen zu können, muss es wiederholt - aber mit entsprechenden Pausen - beaufschlagt werden. Während der Pausen kann die an der Oberfläche absorbierte Strahlungsenergie als Wärme mindestens teilweise ins Materialinnere abgeleitet werden und sich verteilen. Dadurch erniedrigt sich die Oberflächentemperatur wesentlich, wie auch theoretische Überlegungen belegen. Die genaue Länge der notwendigen Pausen ist abhängig von der Glasart und auch der jeweils erreichten Glastemperatur im Oberflächenbereich. Für Floatglas haben die durchgeführten Experimente ergeben, dass bei maximaler Energiebeaufschlagung entsprechend dem oberen Grenzwert von 0,016 Watt x Sekunden/mm$^2$ eine Pause von nur ca. 50 Millisekunden sehr effizient ist. Längere Pausen sind möglich, aber im Hinblick auf eine hohe Schnittgeschwindigkeit ineffizient; kürze Pausen erfordern einen verminderten Energieeintrag gegenüber dem oberen Grenzwert, um die beschriebenen Schädigungen zu vermeiden. Für die technische Umsetzung bedeutet dies, dass die Wärme repetierend und sehr schnell eingebracht werden muss. Für die technische Umsetzung der geforderten schnellen Bewegung des Flecks des Laserstrahles bieten sich Scan-Systeme an, mit denen Scan-Geschwindigkeiten in der Größenordnung bis über 100 m/s realisiert werden können. Darüber hinaus bietet die Computer-gestützte Steuerung der Scan-Systeme den Vorteil, dass beliebige Kurven abgefahren werden können, und ermöglichen so das Schneiden beliebiger Formate. Mit welcher Scan-Geschwindigkeit der Strahlfleck über die Glasoberfläche im jeweiligen Anwendungsfall bewegt wird, errechnet sich aus dem oberen Grenzwert unter Berücksichtigung von Strahlfleckdurchmesser und Leistung des Lasers. Die Länge der erwärmten Strecke auf der Sollschnittlinie wird aus der gewählten Pausenzeit und der eingesetzten Scan-Geschwindigkeit der Wärmequelle bestimmt.

Vorteilhafterweise wird man die Länge der Erwärmungsstrecke und die Scangeschwindigkeit, mit der der Laserstrahl diese Strecke beaufschlagt, so auslegen, daß die dazu benötigte Zeit der geforderten Pausenzeit entspricht, so daß keine zusätzliche Wartezeit eingehalten werden muß, um z. B. die bei Floatglas notwendigen 0,05 Sekunden auszuführen.

Die Anzahl der Repetitionen bestimmt die erreichbare Anritztiefe mit und ist abhängig von der Glasart und vor allen Dingen von der Glasdicke, wobei es minimale und maximale Grenzen gibt, außerhalb derer die Wirkung ineffektiv oder gar schädlich wird. So sind bei dünneren Gläsern weniger Repetitionen notwendig als bei dickeren Gläsern.

Statt nur eine einzelne Wärmespur aufzubringen, kann man auch mit mehreren Wärmespuren (Zinspaket) parallel bzw. eng benachbart und vorzugsweise symmetrisch zur Soll-Trennlinie arbeiten. Dabei ist zu beachten, daß eine größere Breite des Linienpakets als 12 bis 15 mm kaum noch zu einer weiteren Erhöhung der Spannungen führt. Vorteilhaft ist es dagegen, mit einer ungeraden Anzahl von Linien im Paket zu arbeiten, und zwar so daß eine Linie genau auf der Soll-Trennlinie aufgestrichelt wird und des weiteren den Abfahrzyklus (die Reihenfolge des Überstreichens) der Linien so zu gestalten, daß diese mittlere Linie doppelt im Vergleich zu den anderen Linien überscannt wird. Dadurch erhält die mittlere Linie die für die Schnittqualität besonders wichtige Eigenschaft einer Führungslinie. Im Falle eines Linienpakets ist es erforderlich, mit einer gegenüber einer Einzellinie entsprechend kürzeren Vorerwärmstrecke zu arbeiten, wenn man vergleichbare Bedingungen haben will.

Um längere oder fortlaufende Trennlinien, deren Länge die Länge der so berechneten Erwärmungsstrecke übersteigt, anritzen zu können, wird jede Repetition in Richtung der anzureißenden Soll-Linie um ein Vorschubinkrement $\Delta x$ vorgeschoben. Die Inkrementlänge $\Delta x$ resultiert aus der Soll-Schnittgeschwindigkeit $v$ und der Anzahl der Repetitionen N. Dies gilt für den eingeschwungenen Zustand. Am Anfang und Ende eines Schnittes ist es günstiger, eine abgestufte Erwärmung in der Form vorzunehmen, dass auch diese Strecken die gleichen Erwärmungsbedingungen wie im eingeschwungenen Zustand erhalten.

Kurz vor Beginn der Erwärmung der anfänglichen Erwärmungsstrecke oder bevor die Aufheizung der Erwärmungsstrecke abgeschlossen ist, wird auf der Soll-Trennlinie, und zwar vom oder in der Nähe des Startpunkts, ein feiner Anritz mittels eines Ritzdiamanten oder Ritzrädchens gesetzt. Sodann wird am Anritzpunkt die Kühldüse gestartet und mit der Schnittgeschwindigkeit über die erwärmte Soll-Trennlinie gefahren. Durch die Wirkung der Kühlung entstehen dort im Oberflächenbereich des Glases Zugspannungen, die senkrecht zur Soll-Trennlinie wirken und über die Glasdicke abnehmen. Durch die Wirkung der Zugspannungen wird der Anriss ausgelöst und mit der Geschwindigkeit der fahrenden Kühldüse vorangetrieben.

Die Erfindung wird nachstehend unter Bezugnahme auf die anliegenden Zeichnungen sowie anhand einiger Ausführungsbeispiele mehr im einzelnen beschrieben. In den Zeichnungen zeigt:

Fig. 1 in schematischer Form die Erzeugung des laserthermischen Anritzens längs einer Soll-Trennlinie auf einer Glasplatte,

Fig. 2 einen vergrößerten Querschnitt durch die Glasplatte längs der Linie II-II in Figur 1, wo die durch die laserinduzierte Erwärmung längs der Soll-Trennlinie erzeugten Spannungsverhältnisse im Glas über der Glasdicke dargestellt sind,

Fig. 3 einen vergrößerten Querschnitt durch die Glasplatte längs der Linie III-III in Figur 1, der die Spannungsverhältnisse über der Glasdicke nach Einwirkung der Kühlung zeigt,

Fig. 4 in schematisierter Darstellung die prinzipielle Anordnung einer Einrichtung zur Ausführung des erfindungsgemäßen Verfahrens,

Fig. 5 ein Diagramm, das den Zusammenhang zwischen Laserleistung und Strahlfleckdurchmesser in Verbindung mit der Scangeschwindigkeit zeigt,

Fig. 6 eine Grafik, die den Zusammenhang zwischen Anritztiefe und Glasdicke für verschiedene Anritzgeschwindigkeiten zeigt,

Fig. 7 schematisch den Ablauf des Ausschneidens einer rechteckigen Platte,

Fig. 8 schematisch den Ablauf des Ausschneidens eines Spiegels mit an einem Ende halbrunder Rechteckgrundform,

Fig. 9 das Schneiden aneinandergrenzender Glasplatten aus Flachglas, und

Fig. 10 das Abtrennen eines Randstreifens von einer Glasplatte.

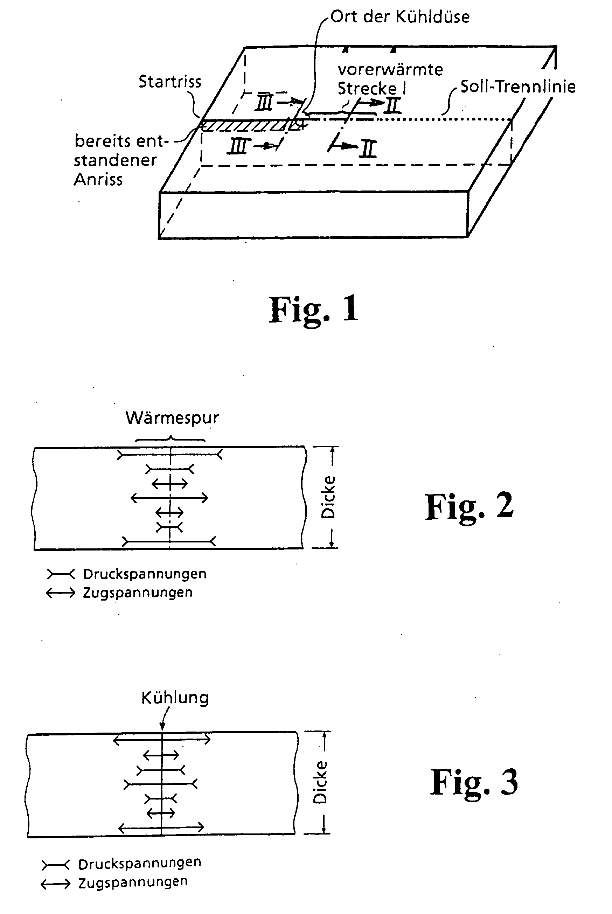

Fig. 1 zeigt schematisch in perspektivischer Darstellung eine Glasplatte, auf der mit dem erfindungsgemäßen Verfahren ein Anritz längs einer Soll-Trennlinie erzeugt wird. Die Soll-Trennlinie ist punktiert eingezeichnet, die Position des Startrisses (mechanische Verletzung am Anritzpunkt) ist angegeben, die repetierend vom Laserstrahl abgescannte Erwärmungsstrecke ist strichpunktiert dargestellt, die hinterhalb dieser Erwärmungsstrecke angeordnete Kühldüse ist eingezeichnet, und der bereits im Glas entstandene Anriß (im Bereich der von der Kühldüse bereits durchlaufenen Strecke) ist schraffiert eingezeichnet.

Die Figuren 2 und 3 zeigen die Spannungsverhältnisse im Glasquerschnitt im Bereich der Soll-Trennlinie im Bereich der Erwärmungsstrecke (Fig. 2) und im Bereich der Kühlung durch die Kühldüse (Fig. 3). Ort und Ausmaß der Druckspannungen und Zugspannungen ist hierbei jeweils über die Glasdicke eingezeichnet. Über die Glasdicke gesehen, liegen also jeweils dreiteilige Spannungsfelder vor, und zwar liegen im Bereich der erwärmten Zone Druck-, Zug-, Druckspannungen, im gekühlten Bereich Zug-, Druck-, Zugspannungen vor, also Zugspannungen sowohl im Bereich der Oberfläche als auch der Gegenfläche. Durch die Zugspannungen wird der Oberflächenriss ausgelöst. Im bereits angerissenen Bereich sind die Spannungen weitgehend abgebaut.

Die Schnittgenauigkeit, d.h. das genaue Folgen des Anritzes entlang der Soll-Trennlinie wird im wesentlichen durch das aufgebrachte Wärmefeld bestimmt, kann aber auch durch die Kühlung beeinflusst werden. Für die Schnittgenauigkeit hat sich eine symmetrische Wärmeverteilung senkrecht zur Soll-Trennlinie und auch senkrecht zur Flächennormalen als vorteilhaft erwiesen, wobei zweckmäßigerweise ein Wärmemaximum in der Mitte, d.h. genau auf der Soll-Trennlinie, vorhanden sein sollte.

Beim Kurventrennen, insbesondere bei engeren Kurven, hat es sich für eine gute Schnittgenauigkeit als vorteilhaft gezeigt, wenn das Wärmeprofil über die genannten Anforderungen hinaus zudem rotationssymmetrisch zur Flächennormalen des zu trennenden Glases ist.

Wie bereits ausgeführt wurde, wird eine besonders gute Schnittgenauigkeit durch ein ausgeprägtes Maximum in der Wärmeverteilung genau auf der Soll-Trennlinie erreicht. Dies kann statt durch eine entsprechende Verteilung der Lichtintensität der Strahlquelle technisch viel leichter, effizienter und zudem variabler mit Hilfe eines Scanners ausgeführt werden. Die prinzipielle Maßnahme dazu wurde für den Fall eines Scanlinienpakets bereits beschrieben. Im Fall einer Einzelscanlinie geschieht dies beispielsweise durch Aufbringen einer zusätzlichen Wärmelinie genau auf der Soll-Trennlinie mit kleinerem Strahlfleckdurchmesser (und gegebenenfalls etwas geringerer Energie). Dadurch wird die Eigenschaft einer Führungslinie hervorgerufen. Eine solche Führungslinie muss mindestens einmal entlang der Repetitionsstrecke aufgebracht werden, und zwar geschieht dies, zeitlich gesehen am günstigsten, kurz bevor die Repetitionsstrecke abgearbeitet worden ist. Dabei muss die Laserbeaufschlagung der Führungslinie auch soweit nach rückwärts erfolgen, dass sich alle Teilstrecken der Führungslinie kontinuierlich aneinanderreihen. Für die technische Realisierung ist es erforderlich, dass sowohl die Fokus-Stellung der Linse schnell verschiebbar als auch die Scanner-Steuerung entsprechend programmiert ist. Dabei kann es besonders vorteilhaft sein, längs der Führungslinie mit variabler Laserleistung zu arbeiten.

Die Kühlung sollte möglichst effektiv wie durch ein auf die Glasoberfläche aufgesprühtes Luft-Wassergemisch erfolgen, wobei möglichst gleichmäßig symmetrisch zur Soll-Trennlinie gekühlt werden sollte. Eine zu schwache Kühlung führt zu einer Minderung der erreichbaren Anritztiefe, wobei im Grenzfall gar kein Anritz entsteht, während eine zu starke Kühlung zu Ungenauigkeiten im Schnittverlauf und damit zu irregulären Abweichungen von der Soll-Trennlinie führen kann.

Eine - auch von Fachleuten - völlig unerwartete Wirkung des erfindungsgemäßen Verfahrens hat sehr große Bedeutung für das Schneiden von Formaten. Diese betrifft das mehr oder minder senkrechte Kreuzen von Anrissen.

Aus Untersuchungen zur Rissausbreitung in Glas ist bekannt, dass ein Riss, der mehr oder minder senkrecht auf einen bereits vorhandenen Riss auftrifft, an diesem gestoppt wird. Diese Kenntnis wird in Schadensanalysen ausgenutzt, um primäre Risse von sekundären Rissen zu unterscheiden, um so den zeitlichen Rissablauf rekonstruieren und den Bruchursprung finden zu können. Um so erstaunlicher ist der Befund, dass auf der gleichen Glasoberflächenseite bereits vorhandene Anrisse durch Laser-induzierte Anrisse gekreuzt werden können, ohne dass eine zusätzliche mechanische Verletzung auf dem jenseitigen Rissufer angebracht werden muß.. Die nachträgliche mikroskopische Inspektion der Bruchflächen ließ keinerlei zusätzliche Verletzung erkennen. Dies kann dazu ausgenutzt werden, um Formate insbesondere mit rechtwinkligen Ecken verletzungsfrei schneiden zu können.

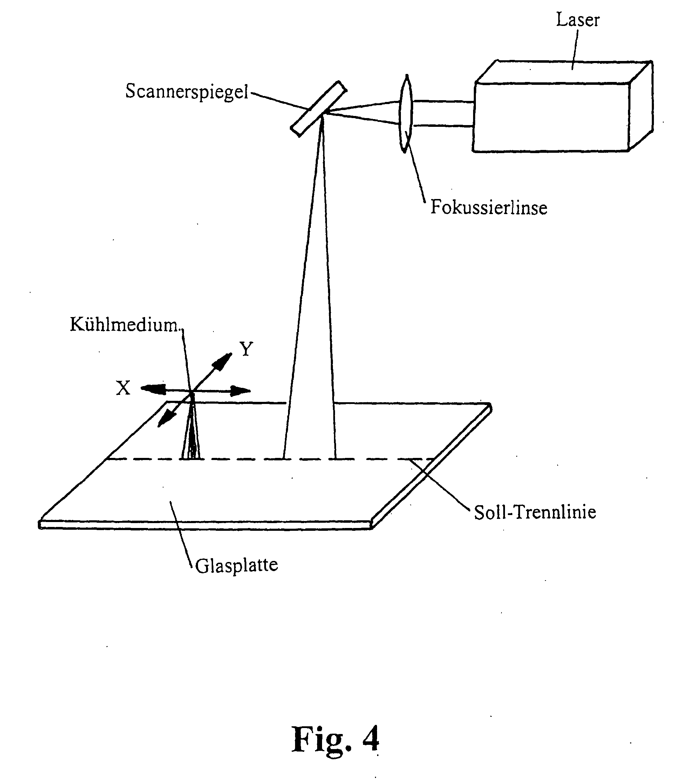

Fig. 4 zeigt eine Prinzipskizze einer Vorrichtung zum Schneiden von Flachgläsern. Die zu trennende Glasplatte liegt auf einem Schneidtisch (nicht dargestellt) auf, der mit einer X-Y-Brücke (nicht dargestellt) ausgerüstet ist. Die X-Y-Brücke, an der Ritzdiamant und Kühlvorrichtung befestigt sind, bewegt sich in einer Ebene (X-Y) oberhalb der und parallel zur Glasplatte. CNC-gesteuert kann sie jede vorgegebene Kurvenform für Ritzdiamanten und Kühlvorrichtung fahren. Die Fahrgeschwindigkeit der X-Y-Brücke beträgt bis zu 60 m/min. Oberhalb des Schneidtischs sind ein Laser und ein Scanner so angeordnet, dass der Laserstrahl auf der Glasplatte ein Feld von beispielsweise 1 x 1 $m^2$ Fläche abscannen kann. Durch die Optik bzw. eine elektronische Korrektur wird eine verzerrungsfreie Abbildung erreicht. Der Durchmesser des auf der Glasoberfläche auftreffenden Laserstrahles, hier Strahlfleckdurchmesser genannt, kann mit Hilfe der elektromechanisch verschiebbaren Fokussierlinse verkleinert und erweitert werden, und zwar in sehr kurzer Zeit im Bereich von 1 mm bis 20 mm.

Als Laser werden bei diesem Verfahren, das im wesentlichen mit Oberflächenerwärmung arbeitet, vorteilhafterweise solche Laser eingesetzt, deren Lichtwellenlänge oberhalb der Absorptionskante der Gläser liegt, also größer als 2,8 $\mu$m ist. Wegen ihrer Kostengünstigkeit und technischen Ausgereiftheit haben wir mit $CO_2$ - Lasern gearbeitet, und zwar wurden 200 Watt und 630-Watt-$CO_2$-Lase (Wellenlänge 10,6 $\mu$m) eingesetzt. Hierbei handelt es sich um so genannte $c_w$-Laser, die also kontinuierlich und nicht im modulierten Impulsbetrieb arbeiten. Dies ist für die Glasbearbeitung von besonderem Vorteil, da so die bei Impulsbetrieb durch Impulsspitzen leichter hervorgerufenen Schrennrisse vermieden werden.

Zum Schneiden größerer (längerer) Glasplatten können diese in x-Richtung CNC-gesteuert auf dem Schneidtisch verschoben werden.

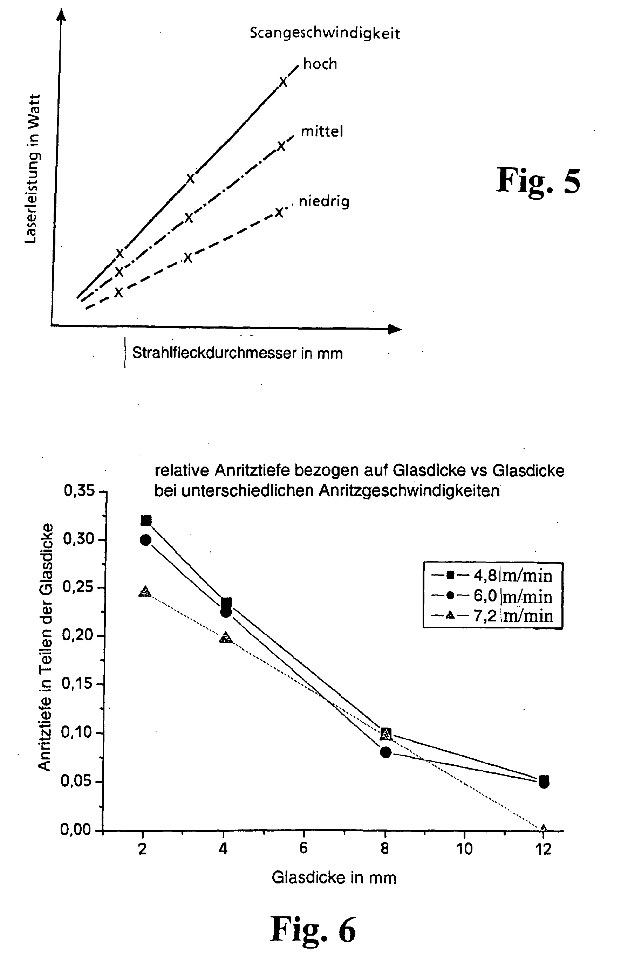

Müssen Gläser bzw. Glasarten geschnitten werden, deren Grenzwerte Sg für die Gefahr einer Schrennrissbildung unbekannt sind, so werden diese im Vorversuch bestimmt. Dabei bringt man Wärmespuren mit unterschiedlicher Laserleistung und unterschiedlichem Strahlfleckdurchmesser bei verschiedenen Scangeschwindigkeiten auf die Oberfläche des zu untersuchenden Glases auf. Variiert wird jeweils nur ein Parameter, z.B. die Laserleistung, die solange erhöht wird bis Schrennrissbildung eintritt. Sodann wird der Einfluss der anderen Parameter untersucht. Im Endeffekt erhält man das in Fig. 5 schematisch dargestellte Ergebnis, das hier für drei unterschiedliche Scangeschwindigkeiten dargestellt ist. Bei Parameterwerten oberhalb der jeweiligen Grenzgeraden tritt Schrennrissbildung auf. Man erkennt, dass man z.B. bei konstantem Strahlfleckdurchmesser bei hohen Scangeschwindigkeiten mit größeren Laserleistungen als bei niedrigen Scangeschwindigkeiten erwärmen kann, ohne dass Schrennrisse auftreten. Aus der Steigung der Geraden wird der Grenzwert Sg (als Energie pro Flächeneinheit) der Schrennrissbildung nach der Formel bestimmt

$$S_g = \frac{P_l}{d \cdot v_s} \quad , \tag{1}$$

wobei $P_l$ = Laserleistung, d = Strahlfleckdurchmesser, $v_S$ = Scangeschwindigkeit des Laserstrahls.

Zu beachten ist, dass der so bestimmte Grenzwert Sg nicht nur von der Glasart abhängt, sondern auch von der Energieverteilung innerhalb des Laserstrahles. Für einen symmetrischen Laserstrahl mit Energiemaximum in der Mitte (bei Gauß-Verteilung) wurde für Floatglas ein Grenzwert Sg = 0,016 Watt · s/mm$^2$ ermittelt.

Dieser Grenzwert $S_g$, bei dem die Entstehung von Schrennrissen gerade noch vermieden wird, gilt nur für den Fall einer einmaligen Beaufschlagung der Glasoberfläche durch den Laserstrahl mit den zugehörigen Parametern $P_1$, d, $v_s$. Ein sofortiges wiederholtes Beaufschlagen der Erwärmungstrecke 1 mit diesen Parametern führt zur Bildung von Schrennrissen, da die zusätzliche thermische Belastung der Oberfläche zu stark ist.

Die thermische Belastung kann nun gemildert werden durch Änderung der Parameter bei vermindertem Grenzwert Sg oder aber - und das ist die generelle Lösung - durch die Einführung von Pausenzeiten $t_p$. Die Pausendauer tp kann leicht experimentell bestimmt werden, indem die Schrennrissbildung bei wiederholtem Scannen mit unterschiedlichen Verzögerungszeiten beobachtet wird. Für Floatglas wurde die notwendige Pausendauer tp mit 50 Millisekunden ermittelt, wenn man die Glasoberfläche mit den maximal möglichen, noch schädigungsfreien Bedingungen entsprechend Gleichung (1) beaufschlagt.

Es sei angemerkt, dass weitergehende Untersuchungen gezeigt haben, dass mit zunehmender Erhitzung der Erwärmungsstrecke, d.h. mit zunehmenden Repetitionen der Laserscans auch die notwendige Dauer der Pausen kleiner wird. Dies kann zu einer weiteren Effizienzsteigerung des Bearbeitungsprozesses genutzt werden.

Vorstehend wurden die Bedingungen beschrieben, unter denen die Entstehung von Schrennrissen vermieden werden kann. Jedoch wird die so bei einer einmaligen Laserbeaufschlagung der Glasoberfläche eingetragene Energie und das dadurch hervorgerufene Temperatur- und Spannungsfeld im allgemeinen nicht ausreichen, um einen Anriss bei den erwünschten erhöhten Schnittgeschwindigkeiten zu erzeugen. Deshalb wird eine sogenannte Erwärmungsstrecke der Länge 1 repetierend N-mal mit der Laserstrahlung beaufschlagt.

Da die Erwärmungsstrecke 1 anschließend mit der Schnittgeschwindigkeit v durchfahren wird, gilt

$$l/v = N \cdot t_p \tag{2}$$

oder im Falle von Floatglas mit Pausendauer tp = 0,05 s

$$l = 0{,}05 \cdot N \cdot v \tag{2a}$$

Erwärmungsstrecke 1, Anzahl der Repetionen N und Schnittgeschwindigkeit v sind aber über Gleichung (2a) miteinander verknüpft.

Zum Trennen längerer Strecken wird nach jeder Laserbeaufschlagung die Erwärmungsstrecke um ein Vorschubinkrement $\Delta x$ längs der Soll-Trennlinie vorgeschoben, wobei gilt

$$\Delta x = l/N \tag{3}$$

oder für Floatglas

$$\Delta x = 0{,}05 \cdot v \qquad\qquad (3a)$$

Für die Erzeugung von Anrissen in verschiedenen Glasarten müssen materialspezifische Aspekte berücksichtigt werden, die nur experimentell erfasst werden können. Dies sei im folgenden anhand von Schnittbeispielen demonstriert.

Von unterschiedlich dicken (2, 4, 8 und 12 mm) Float-Glasplatten der Dimension 80 x 80 cm$^2$ wurden 5 cm breite Streifen dadurch abgetrennt, dass bei unterschiedlichen Schnittgeschwindigkeiten v zunächst Oberflächenanrisse erzeugt und sodann die Glasstreifen per Biegebruch aufgebrochen wurden. Die Oberflächenanrisse wurden mittels 630 Watt-$CO_2$-Laser bei folgenden Parametern eingebracht: 100% Leistung, ca. 4,2 mm Strahlfleckdurchmesser, Länge der Erwärmungsstrecke 1=360 mm, Scan-Geschwindigkeit des Laserstrahles $v_s$ = 12 m/s, Kühlgeschwindigkeiten v von 4,8 m/min, 6 m/min sowie 7,2 m/min. Das zugehörige Inkrement $\Delta x$ der Erwärmungsstrecke betrug dabei 4 mm, 5 mm und 6 mm, während die Anzahl N der Repetitionen der Laserstrahleinwirkung von 90 über 72 auf 60 abnahm. (Die energetischen Bedingungen waren also so ausgelegt, dass knapp unter dem Grenzwert der Schrennrissbildung gearbeitet wurde.) Aus den Bruchflächen wurde die jeweils erreichte Anrisstiefe ausgemessen und ist in Fig. 6 in normierter Form als Funktion der Glasdicke aufgetragen. Hervorgehoben sei, dass beim 12 mm dicken Glas und 7,2 m/min Kühlgeschwindigkeit mit den eingestellten energetischen Bedingungen kein Anriss hervorgerufen werden konnte. Generell zeigt sich, dass die erzeugte relative Anrisstiefe mit der Glasdicke stark abnimmt. Bei noch größeren Glasdicken bzw. höheren Kühlgeschwindigkeiten konnten unter diesen gewählten Energie- und den daraus resultierenden Spannungsbedingungen keinerlei Anrisse ausgelöst werden. Um dennoch tiefere Anrisse erzielen und so auch Gläser größerer Dicke erfolgreich schneiden zu können, haben sich folgende technische Maßnahmen als erfolgreich erwiesen:

1. Arbeiten mit einem Laser höherer Leistung $P_1$. Hierbei muss die Gleichung (1) beachtet werden und dementsprechend der Strahlfleckdurchmesser d vergrößert werden. (Diese Maßnahme kann auch zur Erhöhung der Schnittgeschwindigkeit dienen.)

2. Arbeiten bei höheren eingetragenen Energien dadurch, dass bei konstanter Erwärmungsstrecke 1 die Anzahl der Repetitionen N vergrößert wird, was eine entsprechende Verkleinerung der Inkrementlänge $\Delta x$ erfordert. Es resultiert allerdings daraus eine entsprechende Erniedrigung der Schnittgeschwindigkeit.

3. Aufbringen einer zusätzlichen Vorerwärmung

Da die Auswirkung von Maßnahme 1 evident ist, seien hier die Auswirkungen von Maßnahmen 2 und 3 anhand von Beispielen unterlegt.

So führt die Maßnahme 2, Erhöhung der eingetragenen Energie durch Vergrößerung der Repetitionen von 90 auf 180, insbesondere beim 12 mm dicken Glas zu einer deutlichen Anritzvertiefung, wie der Tabelle entnommen werden kann:

|  | v | $\Delta x$ | N | L | Anritztiefe | |
|---|---|---|---|---|---|---|
|  |  |  |  |  | 8er Glas | 12er Glas |
|  | m/min | mm |  | mm | mm | mm |
| Ausgangssituation | 4,8 | 4 | 90 | 360 | 0,8 | 0,6 |
| Maßnahme 2 | 2,4 | 2 | 180 | 360 | 1,0 | 1,2 |

Für diese größere Anritztiefe infolge Erhöhung der Repetitionen N mussten allerdings, bei ansonsten gleichen Laserbetriebsbedingungen, sowohl die Schnittgeschwindigkeit von 4,8 m/min auf 2,4 m/min als auch die Länge des Inkrements $\Delta x$ von 4 mm auf 2 mm zurückgenommen werden.

Die Maßnahme 3, zusätzliche Vorerwärmung, erwies sich bei dickeren Gläsern als sehr effizient, und zwar sowohl bezüglich einer größeren Anritzvertiefung als auch Erhöhung der Schnittgeschwindigkeit. An Glasplatten unterschiedlicher Dicke wurde eine geradlinige Soll-Linie erwärmt bei verminderter Laserleistung von 80% und vergrößertem Strahlfleckdurchmesser auf ca. 4,0 mm bei auf 480 mm verlängerter Scanlänge und unterschiedlichen Repetitionen N. Die eigentliche Anrisserzeugung wurde danach bei wieder verringertem Strahlfleckdurchmesser durchgeführt, um eine Führungslinie zu haben. Bei Gläsern größerer Dicke (8 und 12 mm) erwies sich eine Erwärmung von 140 Repetitionen als so effektiv, dass für das nachfolgende Aufbringen der Führungslinie bereits 32 Repetitionen ausreichten, um relative Anritztiefen von 0,1 bzw. 0,06 (bezogen auf die Glasdicke) zu erreichen, und das bei zuvor nicht erreichten Schnittgeschwindigkeiten von 15 m/min. Bei dünneren Gläsern (2 und 4 mm) reichten wesentlich weniger Repetitionen der Erwärmung von N = 40, 80 aus, um eine Schnittgeschwindigkeit von 15 m/min zu erreichen.

Eine weitere Maßnahme, nämlich eine zusätzliche Wartezeit nach dem Erwärmen ermöglicht insbesondere bei dickeren Gläsern (Dicke größer als 8 mm) tiefere Anritztiefen. An einer Glasplatte von 18,5 mm Dicke wurde bei einer Laserleistung von 630 Watt, Scanlänge 1 von 360 mm, $\Delta x = 1$ mm, Scangeschwindigkeit von 12 m/s, einem Strahlfleckdurchmesser von 4 mm bei 360 Repetitionen und einer Kühlgeschwindigkeit von 1,2 m/min folgendes erreicht:

| Wartezeit | 0 Sekunden | 20 Sekunden |
|---|---|---|
| Anritztiefe | kaum vertieft | 2,2 mm |

Bei dickeren Gläsern ist sogar eine minimale Wartezeit erforderlich, da es ansonsten zu einem Abknicken des Anritzens kommt mit der Folge, dass die Qualität der Bruchfläche schlecht wird. Wird eine dickenabhängige Wartezeit eingehalten, wobei die Glasdicke in Millimetern einer zugehörigen Wartezeit in Sekunden entspricht, so erhält man sehr gute und qualitativ hochwertige Anrissvertiefungen.

Jedoch führt eine deutliche Verlängerung der Wartezeiten zu einer Verminderung der Anritztiefe, ist also kontraproduktiv. Diese Maßnahme gilt nicht für dünnere Gläser (Dicke kleiner 4 mm), hier ist eine Anwendung von Wartezeiten ineffektiv.

Im folgenden werden einige Beispiele für die Anwendung des erfindungsgemäßen Trennverfahrens angegeben.

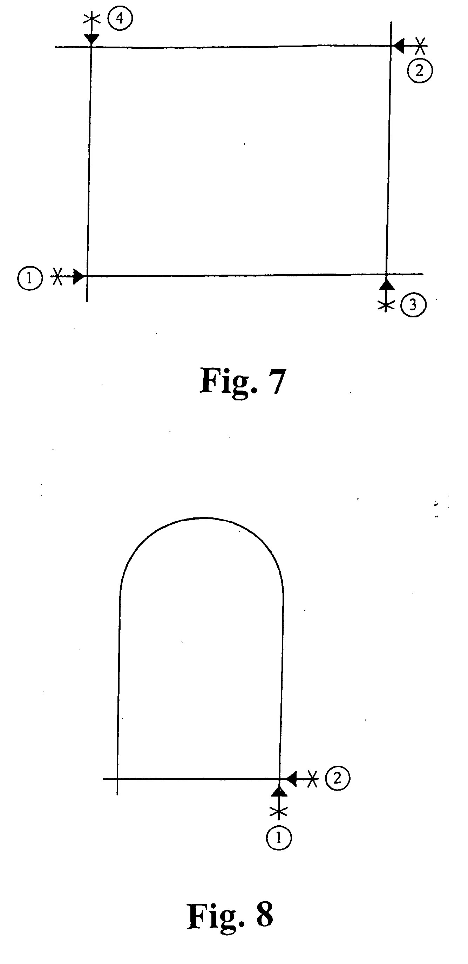

a) Aus 12 mm dickem Floatglas wurde eine rechteckige Platte von 100 cm x 100 cm aufgeschnitten. In Fig. 7 sind Reihenfolge, Verlauf, Richtung und Startritzpunkte (jeweils durch X markiert) angegeben; der Abstand der Startritzpunkte vom tatsächlichen Beginn der Trennlinie ist der Deutlichkeit halber übertrieben groß dargestellt (normalerweise genügen wenige Millimeter). Insbesondere bei kleineren Formaten ist die Reihenfolge der Schnitte sehr wichtig, um eine Beeinflussung der aufzubringenden Wärmelinie durch bereits aufgebrachte Wärmelinien möglichst gering zu halten. Deshalb wird man, wie das Beispiel zeigt, jeweils möglichst entfernt liegende Wärmelinie aufbringen, um Abkühlungen der bereits aufgebrachten Wärmelinie auszunutzen.

Folgende Schneidparameter wurden benutzt:

Anritzgeschwindigkeit 6 m/min
Laserleistung 580 Watt
Scangeschwindigkeit 9,6 m/s
Strahlfleckdurchmesser ca. 4,0 mm
Scanlänge 480 mm
Vorschubinkrement 6 mm
Anzahl der Repetitionen 80

b) Es wurde ein Spiegel vor 90 cm x 60 cm mit halbkreisförmigem Abschluss aus 3,8 mm dickem Flachglas geschnitten (Fig. 8). Die Anritzpunkte sind durch X gekennzeichnet. Die Reihenfolge der Schnitte ist nummeriert. Die Endpunkte der Schnittlinien wurden jeweils einige Millimeter über den eigentlichen Rand der ausgeschnittenen Fläche geführt; wie die Fig. 8 zeigt.

Die benutzten Schneidparameter waren:

Anritzgeschwindigkeit 10 m/min
Laserleistung 600 Watt
Scangeschwindigkeit 16 m/s
Strahlfleckdurchmesser ca. 4,0 mm
Scanlänge 500 mm
Vorschubinkrement 8,3 mm
Anzahl der Repetitionen 60

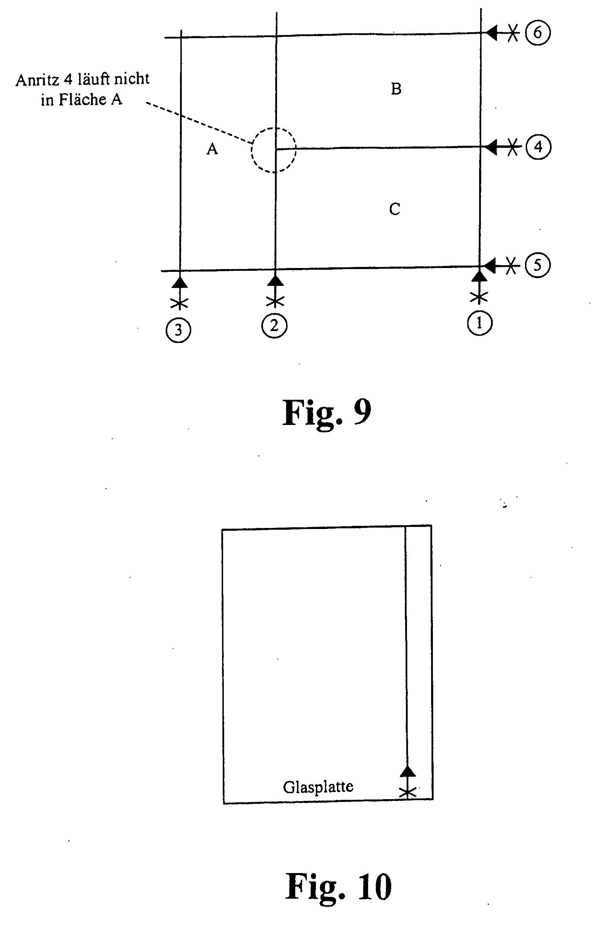

c) Ein Beispiel zum Schneiden mehrer Glasplatten mit gemeinsamen Schnittlinien und unterschiedlichen Flächengrößen ist in Fig. 9 dargestellt. Dort sind Reihenfolge, Richtung, Verlauf, Anritzpunkte (X) und Enden der Schnitte dargestellt, um drei Glastafeln A, B und C auszuschneiden. Die besondere Herausforderung bei dieser Trennaufgabe liegt darin, daß die Schnittlinie Nr. 4 nicht über die Schnittlinie Nr. 2 in die Glasplatte A hineinreichen darf. Es ist aber notwendig, daß der Anritz gemäß Schnittlinie Nr. 4 bis fast genau an die Schnittlinie Nr. 2 geführt wird, damit die Bruchkante dort einwandfrei wird. Dies gelingt mit dem erfindungsgemäßen Verfahren, wenn dafür gesorgt wird, daß am Ende der Schnittlinie Nr. 4 vergleichbare energetische Bedingungen wie im eingeschwungenen Zustand (im Verlauf des Anritzes gemäß Schnittlinie Nr. 4) erzeugt werden.

In diesem Fall wurde mit einem Scan-Linienpaket gearbeitet, das aus drei parallelen, eng benachbarten Einzellinien aufgebaut wurde. Um die geforderte Konturgenauigkeit zu erreich, wurde die mittlere Linie, die genau auf der Soll-Trennlinie aufgebracht wurde, zudem als Führungslinie ausgestaltet. Dies geschah dadurch, daß die mittlere Linie Nr. 1 eine doppelte Anzahl an Repetitionen gegenüber den beiden Seitenlinien (Nr. 2 und Nr. 3) erhielt durch folgende Abfolge in der Bestrahlung (1, 2, 1, 3, 1, 2, 1, 3, 1, 2 ...)
Die benutzten Schneidparameter für dieses Dreifach-Linienpaket waren:
Anritzgeschwindigkeit 6 m/min
Laserleistung 580 Watt
Scangeschwindigkeit 9,6 m/s
Strahlfleckdurchmesser ca. 4,0 mm
Scanlänge 160 mm
Vorschubinkrement 6 mm
Anzahl der Repetitionen 80 pro Linienpaket

d) Das Abtrennen von Randstreifen von dicken (8 und 12 mm) und besonders dicken (18,5 mm) Glasplatten ist in Fig. 10 gezeigt. Die besondere Aufgabenstellung liegt hier in der Erzeugung besonders tiefer Anritzungen, um den nachfolgenden Brechvorgang zu erleichtern und eine gute Trennflächenqualität selbst beim schwierigen Abtrennen eines schmalen Randstreifens von nur 5 cm bzw. 10 cm Breite zu erreichen. Fig. 10 zeigt Verlauf und Richtung der Trennlinie und Lage des Anritzpunkts in diesen 80 x 60 m$^2$ großen Glasplatten.

Zum Abtrennen eines 5 cm breiten Glasstreifens bei 8 und 12 mm dickem Flachglas wurden folgende Schneidparameter benutzt:
Anritzgeschwindigkeit 2,4 m/min
Laserleistung 600 Watt
Scangeschwindigkeit 12 m/s
Strahlfleckdurchmesser ca. 4,2 mm
Scanlänge 360 mm
Vorschubinkrement 2 mm
Anzahl der Repetitionen 180
Wartezeit (zeitlicher Abstand Heizen/Kühlen) 5 s

Die so erreichte Anritztiefe betrug bei dem 8 mm dicken Glas 1,4 mm und bei dem 12 mm dicken Glas 1,6 mm. Die Schneidparameter zum Abtrennen eines 10 cm breiten Glasstreifens bei 18, 5 mm dickem Glas waren:
Anritzgeschwindigkeit 1,2 m/min
Laserleistung 600 Watt
Scangeschwindigkeit 12 m/s
Strahlfleckdurchmesser ca. 4,2 mm
Scanlänge 360 mm
Vorschubinkrement 2 mm
Anzahl der Repetitionen 180
Wartezeit (zeitlicher Abstand Heizen/Kühlen) 20 s
Die so erreichte Anritztiefe betrug bei dem 18,5 mm dicken Glas 2,2 mm.

e) Das folgende Beispiel betrifft das Trennen von Verbundsicherheitsglas. Dieses Verbundsicherheitsglas hat einen stark unsymmetrischen Aufbau dadurch, daß eine dünne Glasplatte über eine PVB-Folie auf eine dicke Glasplatte auflaminiert ist. Im hier angegebenen Beispiel hat die dünne Glasplatte eine Dicke von 2 mm, die dicke Glasplatte eine Dicke von 10 mm, und die PVB-Folie eine Dicke von 0,7 mm. Das Anritzen dieses Verbundsicherheitsglases erfolgte zweistufig erst auf der dünnen Glasplatte und danach auf der dicken Glasplatte, wobei die Schnittlinie jeweils gemäß Fig. 10 geführt wurde.
Zuerst wurde also die dünne Glasplatte mit folgenden Schneidparametern angeritzt:
Anritzgeschwindigkeit 15 m/min
Laserleistung 500 Watt
Scangeschwindigkeit 12 m/s
Strahlfleckdurchmesser ca. 3,7 mm
Scanlänge 480 mm
Vorschubinkrement 2 mm
Anzahl der Repetitionen 32 Danach wurde die Verbundsicherheitsglasscheibe gedreht und genau auf die Schneidlinie justiert, und sodann wurde die dicke Glasplatte mit folgenden Schneidparametern angeritzt:
Anritzgeschwindigkeit 8,0 m/min
Laserleistung 600 Watt

Scangeschwindigkeit 12 m/s
Strahlfleckdurchmesser ca. 4,0 mm
Scanlänge 480 mm
Vorschubinkrement 2 mm
Anzahl der Repetitionen 60

f) Das letzte Beispiel betrifft das Ausschneiden einer kreisförmigen Glaspatte. Hier bewirkte die technische Maßnahme des Aufbringens einer zusätzlichen Führungslinie zu der geforderten Konturgenauigkeit.

Das Ausschneiden einer kreisförmigen Glasplatte mit einem Durchmesser von 12 cm einer quadratischen Grundplatte von 15 x 15 cm$^2$ aus 1,8 mm dickem Glas mit einer Anritzgeschwindigkeit von 15,0 m/min erfolgte in einem ersten Schritt mit folgenden Schneidparametern:
Laserleistung 400 Watt
Scangeschwindigkeit 8 m/s
Strahlfleckdurchmesser ca. 4,7 mm
Scanlänge = Kreisumfang
Anzahl der Repetitionen 30 Danach erfolgte als zweiter Schritt das Aufbringen der zusätzlichen Führungslinie mit folgenden Parametern:
Laserleistung 600 Watt
Scangeschwindigkeit 12 m/s
Strahlfleckdurchmesser ca. 3,7 mm
Scanlänge = Kreisumfang
Anzahl der Repetitionen 8
Anschließend erfolgte die Kühlung.

g) Die technische Maßnahme einer zusätzlichen Führungslinie führte beim Ausschneiden der kreisförmigen Glasplatte zu der geforderten Konturgenauigkeit von $\pm$ 0,05 mm.

**Patentansprüche**

1. Verfahren zum Trennen von Flachgläsern durch thermisches Anritzen mittels eines Laserstrahls, der in Gestalt eines Strahlflecks entlang einer Soll-Trennlinie mit einer gewählten Vorschubgeschwindigkeit über die Glasoberfläche bewegt wird, wobei weiter der so lasererwärmte Linienbereich auf der Glasoberfläche durch eine nachgeführte Kühldüse gekühlt wird, wobei ferner zuvor im oder kurz vor dem Anfangsbereich der Sol-Trennlinie eine Anfangsverletzung der Glasoberfläche in Gestalt eines mechanisch oder auf andere Weise erzeugten Anritzpunkts gesetzt wird, und wobei nach dem thermischen Anritzen ein Brechen des Glases erfolgt,
**dadurch gekennzeichnet, daß** das Führen des Laserstrahls entlang der Soll-Trennlinie in Gestalt eines repetierenden vielfachen Überstreichens entlang der Soll-Trennlinie mittels eines schnell gescannten Laserstrahls erfolgt, wobei zwischen den repetierenden Überstreichungen der Glasoberfläche jeweils eine kurze Pause liegt.

2. Verfahren nach Anspruch 1, wobei die mittels des Laserstrahls pro Zeiteinheit auf ein Flächenelement der Glasoberfläche aufgebrachte Wärmeenergiemenge unterhalb eines materialspezifischen Grenzwerts Sg nach der Formel

$$S_g = \frac{P_l}{d \cdot v_s} \quad \left[\frac{W \cdot s}{mm^2}\right]$$

gewählt wird, wobei $P_l$ die Laserleistung, d der Strahlfleckdurchmesser des Laserstrahls auf der Glasoberflächen, und $v_s$ die Scangeschwindigkeit (Strahlfleckbewegungsgeschwindigkeit) des Laserstrahls über die Glasoberfläche ist.

3. Verfahren nach Anspruch 2, daß der Grenzwert $S_g$ zum Trennen von Floatglas mit maximal 0,016 Ws/mm$^2$ angenommen wird.

4. Verfahren nach einem der Ansprüche 1 bis 3, wobei das repetierende Bestreichen der Glasoberfläche durch den Laserstrahl längs der Soll-Trennlinie in Gestalt eines schmalen Linienpakets aus eng benachbarten Einzellinien erfolgt.

5. Verfahren nach Anspruch 4, wobei die Einzellinien energiesymmetrisch zur Soll-Trennlinie positioniert werden.

6. Verfahren nach einem der Ansprüche 1 bis 5, wobei mittels des Laserstrahls jeweils eine bestimmte Erwärmungsstreckendistanz entlang der Soll-Trennlinie überstrichen wird und diese Erwärmungsstrecke bei jedem Durchgang der repetierenden Überstreichungen durch den Laserstrahl um ein Vorschubinkrement $\Delta$x in Schneidrichtung entlang der Soll-Trennlinie verschoben wird.

7. Verfahren nach Anspruch 6, wobei die Länge des Vorschubinkements $\Delta$x als Quotient der Länge der Erwärmungsstrecke und der gewählten Anzahl der repetierenden mehrfachen Überstreichungen durch den Laserstrahl gewählt wird.

8. Verfahren nach einem der Anprüche 1 bis 7, wobei die Pause zwischen den repetierenden Überstreichungen der Glasoberfläche durch den Laserstrahl **dadurch** erzeugt wird, dass die Länge der überstrichenen Erwärmungsstrecke und die Scan-Geschwindigkeit, mit welcher der Laserstrahl diese Strecke beaufschlagt, die so ausgelegt werden, dass sich die Pausenzeit ergibt.

9. Verfahren nach Anspruch 8, wobei die Pausendauer beim Trennen von Floatglas maximal 0,05 Sekunden beträgt.

10. Verfahren nach einem der Ansprüche 1 bis 9, wobei der Wärmeeintrag auf die Glasoberfläche durch den Laserstrahl bei geradlinigen Soll-Trennlinien im wesentlichen symmetrisch zur Soll-Trennlinie und bei gekrümmten Soll-Trennlinien im wesentlichen rotationsymmetrisch um die Glasflächennormale erfolgt.

11. Verfahren nach Anspruch 10, wobei der symmetrische Wärmeeintrag so erfolgt, daß die Wärmeverteilung mittig und genau auf der Soll-Trennlinie liegend ein Wärmemaximum hat.

12. Verfahren nach Anspruch 11, daß das mittige Wärmemaximum durch eine zusätzlich eingascannte Wärmelinie in Gestalt eines Bestreichens mit dem Laserstrahl mit verkleinertem Strahlfleckdurchmesser als Anritz-Führungslinie erzeugt wird.

13. Verfahren nach Anspruch 12, wobei die Verkleinerung des Strahlfleckdurchmessers durch Verschieben eines Fokussierlinsensystems erfolgt.

14. Verfahren nach einem der Ansprüche 1 bis 13, wobei die Kühldüse in zeitlich konstantem Abstand zum Schwerpunkt der in Schneidrichtung bewegten, durch das Bestreichen mit dem Laserstrahl erzeugten Erwärmungsstrecke geführt wird.

15. Verfahren nach Anspruch 14, wobei der zeitliche Abstand der Kühldüse vom Erwärmungsstreckenschwerpunkt proportional zur Dicke des zu trennenden Flachglases gewählt wird.

16. Verfahren nach einem der Ansprüche 1 bis 15, wobei die Kühlleistung proportional zur Schnittgeschwindigkeit (relative Vorschubgeschwindigkeit der Kühldüse) und zur Glasdicke gesteuert wird.

17. Verfahren nach einem der Ansprüche 1 bis 16, daß durch Wahl einer großen Anzahl von Repetitionen der Laserstrahlbestreichung eine große Anritztiefe erzeugt wird.

18. Verfahren nach einem der Ansprüche 6 bis 17, wobei am Anfang und am Ende der Soll-Trennlinie vergleichbare energetische Bedingungen wie im eingeschwungenen Zustand der repetierenden Laserstrahlbestreichungen zwischen Anfang und Ende der Soll-Trennlinie erzeugt werden.

19. Verfahren nach einem der Ansprüche 1 bis 18, wobei zum Formatschneiden an Ecken und Kreuzungspunkten von Soll-Trennlinien mit kreuzenden Anrissen geschnitten wird.

**Claims**

1. Method for the separation of flat glass through thermal scoring by means of a laser beam, the laser beam being in the form of a beam spot that is moved over the glass surface along a desired separating line with a selected advance speed, wherein further the line portion on the glass surface thus heated by the laser is cooled by a following cooling nozzle, wherein further, in or right in front of the beginning portion of the desired separating line, an initial score in the glass surface, in the form of a scoring mark provided mechanically or in any other way, is provided in advance, and wherein after the thermal scoring the breaking of the glass is effected,

**characterised in that** the guiding of the laser beam along the desired separating line is effected in the form of a repetitive multiple scanning along the desired separating line by means of a rapidly scanned laser beam, wherein a short pause is provided between the respective repetitive scannings of the glass surface.

2. Method according to claim 1, wherein the amount of heat energy applied to an area portion of the glass surface per unit of time by means of the laser beam is selected below a material-specific limiting value Sg according to the formula

$$S_g = \frac{P_l}{d \cdot v_s} \quad \left[ \frac{W \cdot s}{mm^2} \right]$$

wherein $P_1$ is the laser power, d is the beam spot diameter of the laser beam on the glass surface and $v_s$ is the scanning speed (advance speed of the beam spot) of the laser beam over the glass surface.

3. Method according to claim 2, wherein the limiting value Sg for the separation of float glass is assumed with a maximum of 0,016 Ws/mm$^2$.

4. Method according to any one of claims 1 to 3, wherein the repetitive scanning of the glass surface by means of the laser beam along the desired separating line is effected in the form of a narrow line package consisting of closely adjacent individual lines.

5. Method according to claim 4, wherein the individual lines are positioned energetically symmetrically relative to the desired separation line.

6. Method according to any one of claims 1 to 5, wherein a predetermined heating stretch distance is scanned along the desired separating line by means of the laser beam each time, and this heating stretch is displaced in the cutting direction along the desired separating line by an advance increment $\Delta x$ with each cycle of repetitive scannings by the laser beam.

7. Method according to claim 6, wherein the length of the advance increment $\Delta x$ is selected as the quotient of the length of the heating stretch and the selected number of repetitive multiple scannings by the laser beam.

8. Method according to any one of claims 1 to 7, wherein the pause between the repetitive scannings of the glass surface by the laser beam is generated by dimensioning the length of the scanned heat path and the scanning speed with which the laser beam is applied to this path in a way that the pause time is achieved as the result.

9. Method according to claim 8, wherein the duration of the pause for the separation of float glass is a maximum of 0.05 seconds.

10. Method according to any one of claims 1 to 9, wherein the heat input from the laser beam to the glass surface is effected substantially symmetrically with straight desired separating lines, and substantially rotationally symmetrically around the glass surface normal with curved desired separating lines.

11. Method according to claim 10, wherein the symmetrical heat input is effected in a way that the heat distribution has a heat maximum in the center and exactly on the desired separating line.

12. Method according to claim 11, wherein the central heat maximum is generated, as a scoring guide line, by means of an additionally scanned-in heat line in the form of scanning with a laser beam having a reduced beam spot diameter.

13. Method according to claim 12, wherein the reduction of the beam spot diameter is effected by the displacement of a focusing lens system.

**14.** Method according to any one of claims 1 to 13, wherein the cooling nozzle is guided with a temporally constant distance to the center of gravity of the heating stretch which is moved in the cutting direction and generated by the scanning with the laser beam.

**15.** Method according to claim 14, wherein the time distance of the cooling nozzle from the center of gravity of the heating stretch is selected in proportion to the thickness of the flat glass to be separated.

**16.** Method according to any one of claims 1 to 15, wherein the cooling power is controlled in proportion to the cutting speed (relative advance speed of the cooling nozzle) and to the glass thickness.

**17.** Method according to any one of claims 1 to 16, wherein a large scoring depth is generated through selection of a large number of repetitions of the laser beam scanning.

**18.** Method according to any one of claims 6 to 17, wherein, at the beginning and at the end of the desired separating line, energetic conditions comparable to the steady state of the repetitive laser beam scannings between the beginning and the end of the desired separating line are generated.

**19.** Method according to any one of claims 1 to 18, wherein, for cutting to size, cutting is effected at the corners and at intersections of desired separating lines with intersecting scorings.

**Revendications**

**1.** Procédé de découpe de verres plats par entaillage thermique au moyen d'un faisceau laser qui est déplacé sous la forme d'un spot de faisceau sur la surface du verre le long d'une ligne destinée à la découpe à une vitesse d'avance sélectionnée, la zone de la ligne ainsi échauffée sur la surface du verre par laser étant de plus refroidie par une buse de refroidissement asservie, une lésion initiale de la surface du verre sous la forme d'un point d'entaillage produit mécaniquement ou d'une autre manière étant en outre faite préalablement dans la zone du début de la ligne destinée à la découpe ou juste avant celle-ci, et une rupture du verre se produisant après l'entaillage thermique, **caractérisé en ce que** le guidage du faisceau laser le long de la ligne destinée à la découpe a lieu sous la forme d'un balayage multiple répétitif le long de la ligne destinée à la découpe au moyen d'un faisceau laser rapidement scanné, une courte pause ayant lieu entre chacun des balayages répétitifs de la surface du verre.

**2.** Procédé selon la revendication 1, la quantité d'énergie thermique apportée par unité de temps sur un élément de surface de la surface du verre au moyen du faisceau laser étant choisie au-dessous d'une valeur limite Sg spécifique à la matière selon la formule

$$S_g = \frac{P_l}{d \cdot v_s} \quad \left[ \frac{W \cdot s}{mm^2} \right]$$

dans laquelle $P_l$ est la puissance du laser, $d$ le diamètre du spot de faisceau du faisceau laser sur la surface du verre et $v_s$ la vitesse de scan (vitesse de déplacement du spot de faisceau) du faisceau laser sur la surface du verre.

**3.** Procédé selon la revendication 2, la valeur limite Sg pour la découpe de verre flotté étant supposée être égale à 0,016 Ws/mm² au maximum.

**4.** Procédé selon l'une des revendications 1 à 3, le balayage répétitif de la surface du verre par le faisceau laser le long de la ligne destinée à la découpe ayant lieu sous la forme d'un ensemble fin de lignes composé de lignes individuelles étroitement proches.

**5.** Procédé selon la revendication 4, les lignes individuelles étant positionnées, du point de vue de l'énergie, symétriquement par rapport à la ligne destinée à la découpe.

**6.** Procédé selon l'une des revendications 1 à 5, une distance de section d'échauffement déterminée étant chaque fois balayée au moyen du faisceau laser le long de la ligne destinée à la découpe et cette section d'échauffement étant déplacée d'un incrément d'avance Δx dans le sens de coupe le long de la ligne destinée à la découpe à chaque passage des balayages répétitifs par le faisceau laser.

7.  Procédé selon la revendication 6, la longueur de l'incrément d'avance Δx choisie étant le quotient de la longueur de la section d'échauffement et du nombre choisi des balayages multiples répétitifs par le faisceau laser.

8.  Procédé selon l'une des revendications 1 à 7, la pause entre les balayages répétitifs de la surface du verre par le faisceau laser étant obtenue par le fait que la longueur de la section d'échauffement balayée et la vitesse de scan à laquelle le faisceau laser parcourt cette section sont prévues de manière à ce qu'il en résulte le temps de pause.

9.  Procédé selon la revendication 8, la durée de pause lors de la découpe de verre flotté étant égale à 0,05 secondes au maximum.

10. Procédé selon l'une des revendications 1 à 9, l'apport de chaleur sur la surface du verre par le faisceau laser s'effectuant essentiellement symétriquement par rapport à la ligne destinée à la découpe dans le cas de lignes destinées à la découpe droites et essentiellement avec symétrie de rotation autour de la normale à la surface du verre dans le cas de lignes destinées à la découpe courbes.

11. Procédé selon la revendication 10, l'apport de chaleur symétrique s'effectuant de manière à ce que la répartition de chaleur ait un maximum de chaleur situé au centre et exactement sur la ligne destinée à la découpe.

12. Procédé selon la revendication 11, le maximum de chaleur au centre étant produit par une ligne thermique scannée en supplément sous la forme d'un balayage avec le faisceau laser d'un diamètre de spot de faisceau réduit en tant que ligne de guidage d'entaillage.

13. Procédé selon la revendication 12, la réduction du diamètre du spot de faisceau ayant lieu par déplacement d'un système à lentille de focalisation.

14. Procédé selon l'une des revendications 1 à 13, la buse de refroidissement étant guidée à écartement constant dans le temps par rapport au centre de gravité de la section d'échauffement déplacée dans le sens de coupe, produite par le balayage avec le faisceau laser.

15. Procédé selon la revendication 14, l'écartement dans le temps entre la buse de refroidissement et le centre de gravité de la section d'échauffement étant choisi proportionnel à l'épaisseur du verre plat à découper.

16. Procédé selon l'une des revendications 1 à 15, la puissance de refroidissement étant commandée proportionnellement à la vitesse de coupe (vitesse d'avance relative de la buse de refroidissement) et à l'épaisseur du verre.

17. Procédé selon l'une des revendications 1 à 16, une grande profondeur d'entaillage étant obtenue par le choix d'un grand nombre de répétitions du balayage du faisceau laser.

18. Procédé selon l'une des revendications 6 à 17, les conditions énergétiques produites au début et à la fin de la ligne destinée à la découpe étant comparables à celle du régime permanent des balayages répétitifs du faisceau laser entre le début et la fin de la ligne destinée à la découpe.

19. Procédé selon l'une des revendications 1 à 18, la découpe étant effectuée, pour la coupe de formats, par des entailles croisées aux angles et aux points d'intersection de lignes destinées à la découpe.

Ort der Kühldüse

Startriss

vorerwärmte
Strecke I

Soll-Trennlinie

bereits entstandener
Anriss

## Fig. 1

Wärmespur

Dicke

>—< Druckspannungen
<—> Zugspannungen

## Fig. 2

Kühlung

Dicke

>—< Druckspannungen
<—> Zugspannungen

## Fig. 3

Laser

Scannerspiegel

Fokussierlinse

Kühlmedium

Y

X

Soll-Trennlinie

Glasplatte

# Fig. 4

Fig. 5

Fig. 6

**Fig. 7**

**Fig. 8**

Anritz 4 läuft nicht
in Fläche A

B

A

C

**Fig. 9**

Glasplatte

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2813302
- US 5609284 A
- US 5609284 F
- US 2002179667 A1

**In der Beschreibung aufgeführte Nicht-Patentliteratur**

- **F: Kerkhoff.** Ein einfacher Versuch zur Bruchflächenmarkierung durch mechanische Impulse. *Glastechn. Bericht,* 1955, vol. 28, 57, 58
- **F. Kerkhof.** Bruchvorgänge in Gläsern. Verlag der Deutschen Glastechnischen Gesellschaft, 1970